# EUROPEAN PATENT APPLICATION

(11) **EP 0 907 178 A2**
(43) Date of publication of application: **07.04.1999**
(21) Application number: 98307639.9
(22) Date of filing: 21.09.1998
(51) Int. Cl.: G11B 20/10, G06F 3/06

(54) **Variable rate reading and writing**

(30) Priority: 03.10.1997 US 943665
(71) Applicant: Hewlett-Packard Company, Palo Alto, California 94304 (US)
(72) Inventor: Hilton, Richard L., Boise, Idaho 83713 (US)
(74) Representative: Colgan, Stephen James

(57) **Abstract**

An apparatus (10) is provided for optimizing data transfer between a central processing unit (82) and a serial data storage device (12). A data buffer (84) is provided between the central processing unit (82) and the serial data storage device (12) for buffering data. The improvement to the serial data storage device (12) includes read and write circuits (26, 46) for reading and writing data from and to the serial data storage device (12). A speed sensing circuit (22) of the device (12) is operative to detect speed between a head (26, 46) and a storage medium of the serial storage device (12). A servo-mechanical drive system (14) is operative to control operating speed of the storage medium of the serial storage device (12). A reference clock (24) of the device (12) is operative to control data transfer rate of the storage medium to follow speed variations of the storage medium, frequency of the reference clock (24) being proportional to the detected speed from the speed sensing circuit (22) such that the reference clock signal follows speed variations of the storage medium. A method for optimizing such data transfer is also disclosed.

## Description

### FIELD OF THE INVENTION

This invention relates to the storage of computer information within a data storage device and, more particularly, to the control of data transfer rates between a data storage device such as a magnetic tape drive and a host computer.

### BACKGROUND OF THE INVENTION

In a computer system having a host computer and a serial data storage device such as a magnetic tape drive, it is known that it is desirable to write and read data sent to/received from a storage device at a rate that is consistent with the rate at which host data is sent to the storage device by the host computer. For example, when storing computer information on a magnetic tape driven by streaming tape drives, information is stored in units, in the form of blocks, where a blank area, or gap, is provided between each block. No information is stored within the gap. A read head is used to read information from the tape by sensing changes of flux produced by the local magnetic condition of the tape as the tape moves across the read head.

One such construction is a streaming tape system where the tape moves linearly across the read and write heads without stopping in the gaps between blocks. Computer information is typically stored on a tape in a uniform, serial manner. Therefore, it is necessary to read and write information from a tape at a rate that corresponds with the tape drive operating speed. The ability to maintain continuous tape motion leads to streaming efficiency and enhances tape throughput. For the case of a write operation and where a host computer maintains a data transfer rate below that required to maintain continuous streaming operation of the drive, operating efficiency will drop since it becomes necessary to repeatedly reposition the tape. If the host computer maintains a data transfer rate above that required to maintain continuous streaming operation of the drive, efficiency also drops because the data buffer will periodically overflow. The former condition is referred to as an underrun condition and the later is referred to as an overflow condition.

One previous technique for overcoming the above problem has been to equip a tape drive with two or more discrete speeds. For the case where a computer processor encounters an underrun condition and repositioning occurs frequently as a result, a drive is operated at a lower speed in order to prevent repetitive underrun. With such a system, a speed setting for the drive is configured to be slower than the drives fastest capability in order to minimize the time spent operating at the lower speed. As a result, overrun frequently occurs. The higher speed is chosen so as to stay below the typical rate that a processor transfers data. Hence, overrun is favored over underrun because underrun requires tape repositioning, or a change in tape drive speed. However, overflow leads to a discontinuous tape motion during a write operation which causes streaming inefficiency and reduces tape throughput. A similar problem occurs with a read operation.

Another previously known technique for overcoming the above problem of discontinuous tape speed when shifting tape speed has been to continuously vary tape speed via a speed control circuit which adjusts data transfer rate to a tape in a continuously variable manner. Details of such a speed control circuit and system for optimizing data transfer are disclosed in U.S. Patent No. 5,513,326 to Nute which is incorporated herein by reference. With such a speed control circuit and system, the transfer rate of a serial storage device is adjusted according to the utilization of a data buffer, enabling optimization of data transfer to the storage device. Accordingly, data is written and read at a rate that is consistent with the rate with which host data is sent to the tape drive. By matching the read/write rate with the host data rate, frequent stopping and starting of the storage device can be avoided. Furthermore, the holding off of host data transfer can also be avoided. Hence, performance and reliability can be maximized. However, for cases where such a system is used under conditions where the host data rate is widely variable, it becomes necessary to aggressively follow the changes in host data rates in order to avoid using very large buffer RAM sizes. However, it has been found that such a system only works when a reference clock of the system is changed slowly so that a corresponding servo-mechanical system can keep up with changes while maintaining very accurate medium speed control. Otherwise, a relatively large, and more costly, buffer RAM size is needed. Therefore, in order to achieve a more aggressive variable data rate system with reduced cost and improved dynamic performance, further improvements are desired.

This invention relates to the problems associated with data transfer systems susceptible of widely variable host data transfer rates. Design improvements are implemented in order to realize a more aggressive variable data transfer rate.

This invention relates to an improved variable data transfer rate optimization system and method capable of realizing aggressive variable data transfer rates.

### SUMMARY OF THE INVENTION

According to one aspect of this invention, an apparatus is provided for optimizing data transfer between a central processing unit and a serial data storage device. A data buffer is provided between the central processing unit and the serial data storage device for buffering data. The improvement to the serial data storage device includes read and write circuits for reading and writing data from and to the serial data storage device. A speed sensing circuit of the device is operative to detect speed between a head and a storage medium of the serial storage device. Control circuitry of the device is operative to control operating characteristics of the serial data storage device. A servo-mechanical drive system is connected to the control circuitry and operative to control operating speed of the storage medium of the serial storage device. A speed control circuit is operative to generate a reference clock signal. The speed control circuit is operative to control the reference clock to follow speed variations of the storage medium responsive to a detected speed from the speed sensing circuit such that the reference clock signal follows the operating speed of the storage medium so as to match changes in host data rate.

According to another aspect, a method is taught for adjustably regulating data transfer between a serial data storage device unit and a central processing unit. A buffer is provided for buffering data between the serial storage unit and the central processing unit, the data being transferred at a transfer rate. The improved method includes the steps of: detecting relative speed between a read/write head and a storage medium of a serial storage unit; generating a reference clock signal having a frequency proportional to the relative speed between the read/write head and the storage medium; controllably operating a servo-mechanical operating system of the serial storage unit to control the speed of the storage medium approximately with a rate at which host data is sent to the storage device; and controllably adjusting data transfer rate of the serial data storage device in a continuously varying manner responsive to utilization of the data buffer so as to substantially match data transfer rate with speed variations of the storage medium.

### BRIEF DESCRIPTION OF THE DRAWINGS

Preferred embodiments of the invention are described below with reference to the following accompanying drawings depicting examples embodying the best mode for practicing the invention.
Fig. 1 is a simplified block and schematic diagram showing one exemplary system for optimizing data transfer in accordance with one aspect of the invention; and
Fig. 2 is a more detailed representation of one implementation of the simplified block and schematic diagram of Fig. 1.

### DETAILED DESCRIPTION OF THE INVENTION

This disclosure of the invention is submitted in furtherance of the constitutional purposes of the U.S. Patent Laws "to promote the progress of science and useful arts". U.S. Constitution, Article 1, Section 8.

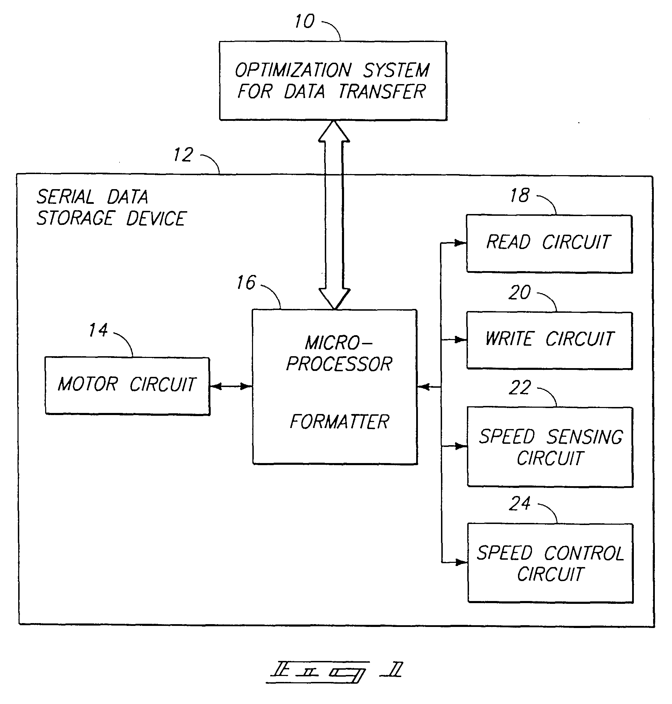

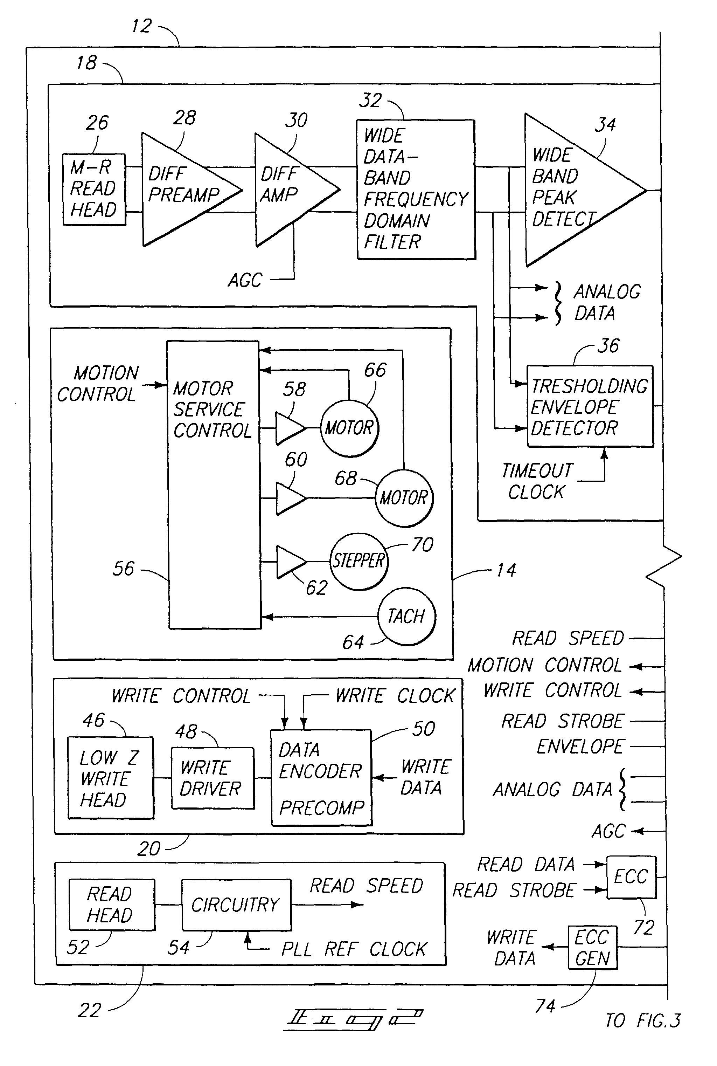

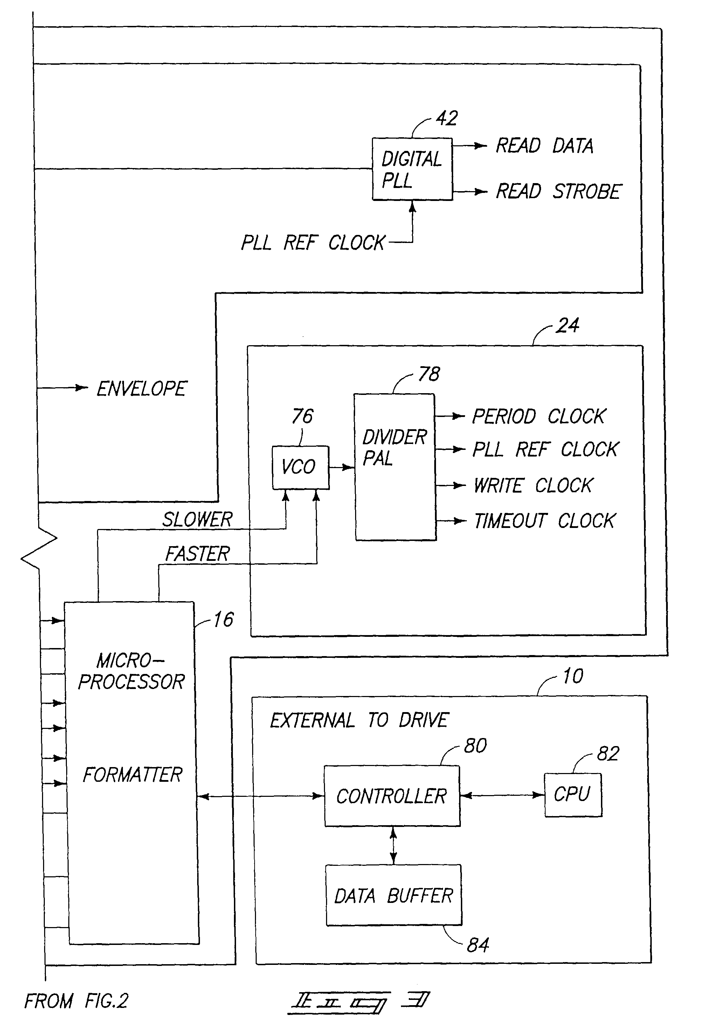

Figure 1 shows a data transfer optimization system 10 according to one aspect of this invention. System 10 is shown operatively connected with a serial data storage device 12 such as a magnetic tape drive to optimize write/read data transfer rates with a host data transfer rate of system 10. System 10, as described below with reference to Figures 2 and 3, includes a central processing unit (CPU) 82, a system controller 80 and a data buffer 84. The CPU 82 forms the processor of a host computer that at least in part forms system 10 for transferring host data with the serial data storage device 12.

Serial data storage device 12 includes a motor circuit 14, a microprocessor/formatter 16, a read circuit 18, a write circuit 20, a speed sensing circuit 22 and a speed control circuit 24. Speed sensing circuit 22 is used to operatively detect relative speed between a head and a storage medium of serial data storage device 12. Microprocessor/formatter 16 comprises control circuitry that operatively controls the operating characteristics of the serial data storage device 12. More particularly, microprocessor/formatter 16 controls a servo-mechanical drive system of motor circuit 14 to approximately control the operating speed of the storage medium of the serial data storage device 12. Speed sensing circuit 22 detects speed conditions of the storage medium relative to the read/write head(s), producing a detected speed output that is received by the speed control circuit 24. Speed control circuit 24 receives the detected speed output and generates a clock signal that adjusts the speed of the read and write drive circuits 18 and 22, respectively.

According to the above implementation and in contrast to the teachings of U.S. Patent 5,513,326 to Nute, the servo-mechanical system of motor circuit 14 is used to control the speed of the storage medium so that it approximately follows a speed corresponding to that of the host data rate. The storage medium in one embodiment comprises a streaming tape. Such an approximate following occurs with a reduced and less demanding accuracy and typically under higher accelerations than Nute, especially where very dynamic changes occur with the host data rate. In the case of Nute, a voltage controlled oscillator (VCO) is directly controlled to follow the host data rate, with the servo control attempting to accurately follow changes in the voltage controlled oscillator frequency that correspond with the host data rate. The electronics of the voltage control oscillator (VCO) serve as a master, with the servo-mechanical system serving as a follower. However, such a master/slave relationship only appears to work accurately when the voltage controlled oscillator (VCO) is changed slowly so that the servo-mechanical system can keep up with the changes while maintaining a very accurate medium speed control.

In contrast to Nute, the design of Figures 1 and 2 reverses the master/slave relationship between motor circuit 14 and speed control circuit 24. The servo-mechanical system of motor circuit 14 controls the speed of the storage medium. However, the speed is only approximately that needed to match the host data rate, requiring a less demanding accuracy and allowing higher accelerations of the storage medium, leaving it to the electronics of speed control circuit 24 to control a variable frequency oscillator (VFO), in one form a voltage controlled oscillator (VCO), to follow the speed variations of the storage medium. The electronics of speed control circuit 24 are then used to control a signal clock that more accurately follows the detected speed variations of the storage medium via speed sensing circuit 22. In this manner, the read/write rate can be matched with the host data rate, avoiding frequent stopping and starting of the storage device. Furthermore, the holding off of host data transfers can also be avoided. In an improved manner over Nute, the host data rate of the system can widely vary without requiring the use of a very large buffer RAM memory size since the master-slave relationship present in the design improvements of this invention can more aggressively follow changes in host data rate. Hence, the system 10 of this invention enables writing/reading of data at a rate that is consistent with the rate at which host data is sent to the data storage device 12 even where host data rate changes dynamically.

Figures 2 and 3 illustrate in further detail one implementation for system 10 with the motor circuit 14 of serial data storage device 12 operable as a master circuit, and with speed control circuit 24 operable as a slave circuit. Speed control circuit 24 substantially comprises a reference clock and cooperates with a microprocessor/formatter 16 and with data buffer 84 via controller 80. Microprocessor/formatter 16 initiates a MOTION CONTROL signal for adjusting the servo-mechanical system of motor circuit 14 to control the speed of the storage medium, or tape, to approximately follow the data transfer rate of the host device to direct the storage medium to be driven at approximately the data rate being transferred. Microprocessor/formatter 20 also outputs a VCO control signal to VCO 76, which outputs a clock signal to divider PAL 78, which in turn outputs a plurality of clock signals to associated components of device 12 based upon a received clock signal including a PERIOD CLOCK signal, a PLL REF CLOCK signal, a WRITE CLOCK signal, and a TIMEOUT CLOCK signal. Each of the preceding clock signals is used to adjust associated drive circuits.

Optimization system 10 and storage device 12 are depicted in Figures 2 and 3 in a configuration suitable for a low-cost, low-end performance system. For the case of a more expensive high-end performance system, controller 80 and buffer 84 would be implemented internally at storage device 12. Hence, optimization system 10 would be substantially formed within storage device 12. CPU 82 would comprise a separate, stand-alone host computer that is signal coupled with storage device 12.

Motor circuit 14 comprises a motor servo control circuit in the form of motor service control 56. Motor service control 56 receives a MOTION CONTROL signal from microprocessor/formatter 16, directing motor circuit 14 to drive a storage medium at a speed approximating that required by the host data transfer rate from CPU 82. Motor servo control circuit 56 is operative to output control signals via device drivers 58 and 60 to drive motors 58 and 60, respectively. Additionally, motor service control circuit 56 outputs a control signal via device driver 62 to a stepper motor 70. Stepper motor 70 steps heads 26, 46 and 52 between different tracks of a magnetic tape, or storage medium. Furthermore, a tachometer 64 outputs a control signal to motor service control circuit 56 in order to monitor motor speed. The monitored motor speed is then compared with the desired speed from microprocessor/formatter 16.

Read circuit 18 comprises a magnetoresistive (MR) read head 26 and associated operating electronics. According to one implementation, the operating electronics for a read circuit disclosed in U.S. Patent No. 5,513,326 can be used. It is to be understood that any of a number of other circuit implementations presently understood in the art can also be used. In the one implementation, read circuit 18 includes electronics comprising a differential preamplifier 28, a gain controlled differential amplifier 30, a wide data band frequency domain filter 32, a wide band peak signal detector 34, a thresholding envelope detector 36, a time domain filter 38, a pulse generator 40, and a digital phase lock loop (PLL) circuit 42. Read head 26 is implemented as a magneto-resistive (MR) read head in order to provide a constant output amplitude, even where the speed of the storage medium (streaming tape) varies. Pursuant to the implementation of read circuit 18 depicted in Figures 2 and 3, MR read head 26 outputs a low level signal to differential preamplifier 28, adjacent read head 26. Preamplifier 28 responds to the low level signal by outputting an amplified signal to differential amplifier 30. Differential amplifier 30 is gain controlled via an analog automatic gain control (AGC) signal which is received from microprocessor/formatter 16 where it is generated. Accordingly, the gain from differential amplifier 30 is adjusted by adjusting the automatic gain control signal, in the form of an analog data signal, which provides a signal that is applied to filter 32. The resulting gain-enhanced signal is input to wide band peak detector 34. Furthermore, the gain-enhanced signal is input to thresholding envelope detector 36, as well as to microprocessor/formatter 16 via a pair of leads for providing an ANALOG DATA signal.

Filter 32 is configured as a low-pass (LP) filter to filter out high frequency noise in the signal. Such filtering improves the ability to detect data on the storage device, or streaming tape drive 12.

Wide band peak detector 34 comprises a differentiator configured to have a high gain relative to the signal peaks received from filter 32. Detector 34 produces an output pulse that corresponds with peaks of the input signal received from filter 32 that are above a minimum threshold.

Thresholding envelope detector 36 is signal coupled to receive a TIMEOUT CLOCK signal from divider PAL 78. Detector 36 produces an ENVELOPE output signal that is delivered to microprocessor/formatter 16. ENVELOPE signal comprises an output signal indicative of the presence of usable data within read circuit 18.

Wide band peak detector 34 delivers the peak output signal to digital PLL 42 which has a constant pulse width. Digital PLL 42 also receives a PLL REF (reference) CLOCK signal from divider PAL 78. Digital PLL 42 produces a READ DATA output signal and a READ STROBE output signal. The READ DATA signal is input to an error detection/correction circuit (ECC) 72. A synchronizing READ STROBE signal is used to synchronize the READ DATA signal which is output from digital PLL 42. Error detection/correction circuit (ECC) 72 is configured to receive the READ DATA signal, and is operative to check an error code of the signal for indicia indicative of errors and correct the signal when errors are detected. Data from read circuit 18 via ECC 72 is then sent to host central processing unit (CPU) 82 via microprocessor/formatter 16 which converts the data and sends it to controller 80 before being received by CPU 82.

Write circuit 20 comprises a low-impedance (Z) write head 46 and associated operating electronics. According to one implementation, the operating electronics for a write circuit disclosed in U.S. Patent No. 5,513,326 can be used. It is to be understood that any of a number of other circuit implementations presently understood in the art can also be used. In the one implementation, the operating electronics comprise a write driver 48 and a modified frequency modulation (MFM) data encoder 50. Host data from central processing unit (CPU) 82 is delivered via controller 80 to microprocessor/formatter 16, which sends the data to error correction code generator (ECC GEN) 74. A WRITE DATA signal is output from error correction code generator 74 to write circuit 20. ECC generator circuit 74 sends the WRITE DATA signal to data encoder 50 of write circuit 20.

Data encoder 50 is configured to modulate a signal that is applied to write driver 48. In addition to receiving the WRITE DATA signal, data encoder 50 also receives a WRITE CLOCK signal from divider PAL 78 and a WRITE CONTROL signal from microprocessor/formatter 16. A precompensation circuit (PRECOMP) is included within data encoder 50 and is operative to minimize any interference effects between bits, thereby minimizing any peak shift of data stored on the magnetic medium, or tape.

Write driver 48 receives the modulated signal from data encoder 50 and outputs a signal to write head 46 to enable data to be written to the storage medium, or tape, responsive to host data initially received from CPU 82. Write head 46 comprises a low-impedance write head since such a write head facilitates quick response current flow, thus, minimizing any peak signal shift, or lag, resulting from a slow write current rise time.

Speed sensing circuit 22 comprises a read head 52 and associated operating electronics configured to operate as a speed sensor. According to one construction, read head 52 can be implemented as a magneto-resistive (MR) read head similar to read head 26. Similarly, the operating electronics comprising circuitry 54 can be implemented via differential preamplifier 28, differential amplifier 30, filter 32, peak detector 34, envelope detector 36, filter 38, pulse generator 40 and digital PLL 42. Alternatively, any other form of read head and associated signal processing and operating electronics can be used. Most importantly, read head 52 and associated operating circuitry 54 are to be configured to operate as a speed sensor capable of detecting the relative speed between the storage medium, or tape, and the heads 26, 46 and 52.

When implementing the apparatus and method of this invention, there is a need to accurately measure the speed of the storage medium relative to the read/write head(s) so that the variable frequency oscillator (VFO), or voltage controlled oscillator (VCO) 76, can accurately follow the relative speed. Essentially any speed transducer capable of accurately measuring the relative speed will work. For the case where a dedicated or embedded servo system is used for tracking head position relative to a storage medium, the speed information can be encoded with the position tracking information. Timing information read from servo tracks on the storage medium will give a very accurate measure of the speed at the head, and electronic circuits are used to control the variable frequency oscillator (VFO) to accurately follow the measured speed.

As a result of accurately measuring the relative speed of the storage medium, the servo system no longer has to provide precise speed control or follow precise profiles while changing speeds. Instead, the master/slave relationship between the servo-mechanical system of motor circuit 20 (and associated storage medium) and variable frequency oscillator (VFO) comprising voltage controlled oscillator (VCO) 76 makes it easier to control the VFO at wider bandwidths (larger variations in operating speed of the storage medium resulting from fluctuations in host data rate). In contrast, it has been found to be much more difficult to accurately control a servo-mechanical system at these same bandwidths, especially for the case where the speed variations of the storage medium occur more frequently and more quickly in order to follow fluctuations in host data rate. Such is the shortcoming found in the device and method of U.S. Patent No. 5,513,326 to Nute.

With the device and method of this invention, the servo-mechanical system is directed to drive the servo-mechanical system to move the storage medium at a speed approximate that necessary to follow the host data rate. A READ SPEED signal is received from speed sensing circuit 22 by microprocessor/formatter 16 and a MOTION CONTROL signal is output to motor circuit 14 indicative of the desired speed between read head 26 and write head 46 of read circuit 18 and write circuit 20, respectively, and the storage medium, or tape, of serial data storage device 12. The read and write heads will move at the same speed relative to the storage medium, and in one embodiment will be provided on a single, common head assembly. The net result of such a system is that the servo-mechanical system of motor circuit 14 no longer has to provide precise speed control or follow precise velocity profiles while changing speeds. With such a system, the storage device 12 can change the speed of the storage medium, or tape, much faster, thus allowing the device to better match a host having a variable data transfer rate without having to resort to very large buffer RAM sizes. Hence, the tape speed more efficiently and closely matches the host data rate.

Fundamental to this system, a reference clock is generated by the variable frequency oscillator (VFO), here VCO 76, in which the frequency of the clock is proportional to the relative speed between the read/write heads 26/46 and the storage medium (magnetic tape). Since the rate at which data is written to the storage medium is derived from the VFO, the data will be correctly spaced on the medium regardless of the speed of the medium at the time the data is written.

In operation, the optimization system 10 and serial data storage device 12 according to this invention cooperate such that host CPU 82 outputs or receives data with data buffer 84 via controller 80. The operating status of data buffer 84 is monitored by microprocessor/formatter 16 in order to determine static and dynamic operating conditions of buffer usage. Essentially, the level of fill for the buffer is monitored. The static condition indicates the amount of available storage space present in data buffer 84. The dynamic condition indicates the speed with which the amount of available storage space within data buffer 84 is changing. Microprocessor/formatter 16 controls and adjusts the speed of motors 67 and 68 to drive a storage medium at a desired speed approximately that required by the data transfer rate from CPU 82. Speed control circuit 24 generates a reference clock that follows head-to-medium speed variations to adjust data transfer rate so that buffer 84 does not over/under fill.

There also exist many other parameters within a read/write system of a storage device 12 than need to be adjusted as the host data rate from a CPU 82 changes. For example, filter bandwidths, AGC loop control bandwidth, PLL loop bandwidth, write equalization, and precomp timing need to be adjusted. Additional parameters not listed above might also need to be adjusted. For the case of many specific circuit implementations, the circuits can be (and frequently are) designed to follow a reference clock frequency. Therefore, they automatically adjust to changes in host data rate by feeding a VFO-derived reference clock to the reference clock input of the circuit in question. For the case of any parameters that must be reprogrammed as the host data rate changes, the parameters can be programmed periodically as needed. If such reprogramming will disrupt normal operation, the programming of such parameters can be done during short gaps present between data fields of the storage medium. These gaps frequently exist for other unrelated reasons, for example, they can be "append" gaps. Therefore, there might not be any resulting penalty with respect to total storage capacity of the storage medium where such other reason exists.

Even for the case where a circuit has been designed to automatically adjust to changes in host data rate, there may be a need to have parameters changed as the host data rate moves outside some dynamic range limitation. In order to be capable to support a wide overall host data rate dynamic range, such circuits would have to be designed to cover multiple, overlapping ranges. One solution would be to provide for changes between ranges via "gear shifting" where the range is changed during the gaps present between data fields. For the case where the settling time from a "gear shift" is too long, then parallel circuits can be used. "Gear shifting" can be accomplished by switching to a separate circuit that is designed to cover a different range of host data rates, but has already settled to the current host data rate. Accordingly, once switch-over has occurred, no further settling time will be required.

In compliance with the statute, the invention has been described in language more or less specific as to structural and methodical features. It is to be understood, however, that the invention is not limited to the specific features shown and described, since the means herein disclosed comprise preferred forms of putting the invention into effect. The invention is, therefore, claimed in any of its forms or modifications within the proper scope of the appended claims appropriately interpreted in accordance with the doctrine of equivalents.

## Claims

1. An apparatus (10) for optimizing data transfer between a central processing unit (82) and a serial data storage device (12), a data buffer (84) being provided between the central processing unit (82) and the serial data storage device (12) for buffering data, the serial data storage device (12) comprising:
read and write circuits (18, 20) for reading and writing data from and to the serial data storage device (12);
a speed sensing circuit (22) operative to detect speed between a head (26, 46) and a storage medium of the serial storage device (12);
a servo-mechanical drive system (14) operative to control operating speed of the storage medium of the serial storage device (12); and
a reference clock (24) operative to control data transfer rate of the storage medium to follow speed variations of the storage medium, frequency of the reference clock (24) being proportional to the detected speed from the speed sensing circuit (22) such that the reference clock signal follows speed variations of the storage medium.

2. The apparatus of claim 1 further comprising control circuitry (16) connected to the servo-mechanical drive system (14) and operative to control operating characteristics of the serial data storage device (12).

3. The apparatus of claim 1 wherein the speed control circuit (24) comprises a variable frequency oscillator (VFO) (76) operative to generate a reference clock.

4. The apparatus of claim 3 wherein the reference clock frequency is proportional to the relative speed between the read/write heads (26, 46) and the storage medium.

5. The apparatus of claim 1 wherein the servo-mechanical drive system (14) comprises a master drive system and the speed control circuit (24) comprises a slave speed control circuit.

6. The apparatus of claim 1 wherein the speed sensing circuit (22) comprises a read head (52) operative to read position tracking information of an embedded servo control system of the data storage device (12), the position tracking information providing a very accurate measure of speed between the head (52) and the storage medium.

7. The apparatus of claim 1 wherein the servo-mechanical drive system comprises a motor circuit (14) including a servo-control circuit (56), a signal driver (58, 60) and a motor (66, 68) operative to cooperatively drive the storage medium to approximately follow a variable data rate from a host cpu (82).

8. A method of adjustably regulating data transfer between a serial data storage device (12) and a central processing unit (82), a buffer (84) provided for buffering data between the serial storage device (12) and the central processing unit (82), the data being transferred at a transfer rate, the method comprising the steps of:
detecting relative speed between a read/write head (26, 46) and a storage medium of a serial storage device (12);
generating a reference clock signal having a frequency proportional to the relative speed between the read/write head (26, 46) and the storage medium;
controllably operating a servo-mechanical operating system (14) of the serial storage device (12) to control the speed of the storage medium approximately with a rate at which host data is sent to the storage device (12); and
controllably adjusting data transfer rate of the serial data storage device (12) in a continuously varying manner responsive to utilization of the data buffer (84) so as to substantially match data transfer rate with speed variations of the storage medium.

9. The method of claim 8 wherein the step of detecting relative speed comprises reading position tracking information embedded within the moving storage medium to determine a relative speed condition.

10. The method of claim 8 further comprising the step of writing/reading data to/from the storage medium at a speed substantially matched with the host data transfer rate.
